# EUROPÄISCHE PATENTSCHRIFT

(11) **EP 3 687 934 B1**
(45) Veröffentlichungstag und Bekanntmachung des Hinweises auf die Patenterteilung: **08.09.2021**
(21) Anmeldenummer: 18766290.3
(22) Anmeldetag: 18.09.2018
(51) Int. Cl.: B66B 19/00

(54) **AUSRICHTVORRICHTUNG UND VERFAHREN ZUR MONTAGE EINER FÜHRUNGSSCHIENE IN EINEM AUFZUGSCHACHT EINER AUFZUGANLAGE**
ALIGNMENT DEVICE AND METHOD FOR INSTALLING A GUIDE RAIL IN A HOISTWAY OF AN ELEVATOR SYSTEM
DISPOSITIF D'ALIGNEMENT ET PROCÉDÉ D'INSTALLATION D'UN RAIL DE GUIDAGE DANS UNE CAGE D'UN SYSTEME D'ASCENSEUR

(30) Priorität: 27.09.2017 EP 17193506
(43) Veröffentlichungstag der Anmeldung: 05.08.2020
(73) Patentinhaber: Inventio AG, 6052 Hergiswil (CH)
(72) Erfinder: CAMBRUZZI, Andrea, 8057 Zürich (CH); BÜTLER, Erich, 6030 Ebikon (CH); ZIMMERLI, Philipp, 4624 Härkingen (CH); BITZI, Raphael, 6003 Luzern (CH)
(86) Internationale Anmeldenummer: PCT/EP2018/075161
(87) Internationale Veröffentlichungsnummer: WO 2019/063356

(56) Entgegenhaltungen:
- EP-A1- 2 873 640
- EP-A1- 3 085 660
- WO-A1-2007/135228
- WO-A1-2017/016780
- WO-A1-2017/016781
- JP-A- H05 105 362

## Beschreibung

Die Erfindung betrifft eine Ausrichtvorrichtung zum Ausrichten einer Führungsschiene in einem Aufzugschacht einer Aufzuganlage gemäss Anspruch 1 und ein Verfahren zur Montage einer Führungsschiene in einem Aufzugschacht einer Aufzuganlage gemäss dem Oberbegriff des Anspruchs 4.

Bei der Installation einer Aufzuganlage in einem Aufzugschacht werden unterschiedliche Montageschritte ausgeführt, beispielsweise muss unterschiedliches Schachtmaterial, beispielsweise in Form von Schienenbügeln oder Führungsschienen an jeweiligen SollPositionen im Aufzugschacht montiert werden. Die Führungsschienen dienen im Betrieb der Aufzuganlage der Führung von Aufzugkabinen und gegebenenfalls zugehörigen Gegengewichten. Die Führungsschienen werden üblicherweise mittels eines Schienenbügels, welcher ein Schienenbügelunterteil und ein Schienenbügeloberteil aufweist, und sogenannten Schienenclips an einer Schachtwand des Aufzugschachts fixiert. Dazu wird üblicherweise zunächst das Schienenbügelunterteil an der Schachtwand beispielsweise mittels Schrauben oder Ankerbolzen fixiert und die Führungsschiene mittels der Schienenclips am Schienenbügeloberteil befestigt. Anschliessend wird die Führungsschiene ausgerichtet und das Schienenbügelunterteil mit dem Schienenbügeloberteil in der sich durch die Ausrichtung ergebenden Positionierung zueinander fest verschraubt. Schienenbügel werden auch als so genannte Brackets bezeichnet.

Der Schienenbügel kann auch als ein so genanntes Omega-Bracket ausgeführt sein. Ein Omega-Bracket verfügt über zwei Schienenbügelunterteile, die anliegend an einer Schachtwand fixiert und durch ein Schienenbügeloberteil verbunden werden. Ein Omega-Bracket ist so ausgeführt und an einer Schachtwand montiert, dass sich ein Zwischenraum zwischen Schienenbügeloberteil und Schachtwand ergibt, durch den ein Gegengewicht einer Aufzugkabine hindurchgeführt werden kann. Am Schienenbügeloberteil sind ebenfalls Schienenclips angeordnet, mittels welchen eine Führungsschiene am Schienenbügeloberteil und damit an der Schachtwand fixiert werden kann.

Die korrekte Montage und insbesondere die exakte Ausrichtung der Führungsschienen ist für den Fahrkomfort der Aufzugkabinen sehr wichtig. Unter der Ausrichtung einer Führungsschiene soll in diesem Zusammenhang sowohl die korrekte Position im Aufzugschacht, als auch die Position gegenüber eventuell angrenzenden Führungsschienen verstanden werden. Die exakte Ausrichtung von Führungsschienen ist auch insbesondere deshalb wichtig, weil sie nach erfolgter Fixierung aller notwendigen Führungsschienen einer Aufzuganlage, wenn überhaupt, nur noch mit sehr grossem Aufwand korrigiert werden kann.

Bei der Montage der Führungsschienen wird meist zunächst eine Führungsschiene komplett inklusive Ausrichtung montiert und anschliessend mit der Montage der folgenden Führungsschiene begonnen. Um die Führungsschienen ausrichten zu können, werden meist Referenzelemente beispielsweise in Form von Richtschnüren im Aufzugschacht gespannt, gegenüber denen die Führungsschienen ausgerichtet werden müssen. Ein derartiges Verfahren ist beispielsweise in der WO 2015/091419 A1 beschrieben. Damit können die Führungsschienen genau ausgerichtet werden. Allerdings ist die Montage und die Ausrichtung recht zeitaufwändig, da häufig unterschiedliche Arbeitsschritte unter Verwendung verschiedener Werkzeuge durchgeführt werden müssen. Ausserdem können die Referenzelemente einen erheblichen Abstand zur Führungsschiene aufweisen, der zur Ausrichtung der Führungsschienen aufwändig überbrückt werden muss.

Für eine rationelle Montage von Führungsschienen kann es vorteilhaft sein, wenn nicht die Führungsschienen nacheinander komplett montiert werden, sondern beispielsweise zunächst nur alle notwendigen Schienenbügelunterteile an den Schachtwänden fixiert und anschliessend die Führungsschienen nacheinander ausgerichtet und montiert werden. Dies ist insbesondere dann der Fall, wenn die Fixierung der Schienenbügelunterteile oder wenigstens das Bohren der dafür notwendigen Löcher in der Schachtwand und das Einbringen von Befestigungselementen in Form von Schrauben oder Ankerbolzen zumindest teilautomatisiert, beispielsweise mit Hilfe einer Montagevorrichtung gemäss der WO 2017/016783 A1 der Anmelderin erfolgt.

Die im Aufzugschacht gespannten Referenzelemente können bei der Montage der Führungsschienen stören. Ausserdem besteht die Gefahr, dass während der Montage der Führungsschienen die Position der Referenzelemente verändert wird und es so zu einer fehlerhaften Ausrichtung der Führungsschienen und damit in letzter Konsequenz zu einem schlechten Fahrkomfort und höherem Verschleiss an der Aufzugkabine kommt.

Die JPH 05105362 A und EP 3085660 A1 beschreiben automatisierte Montagevorrichtung zur Durchführung von Installationen in einem Aufzugschacht einer Aufzuganlage. Diese Montagevorrichtungen können Führungsschienen ausrichten und an einer Schachtwand fixieren. Die Ausrichtung erfolgt dabei gegenüber im Aufzugschacht angeordneten Ausrichtelementen in Form von Ausrichtschnüren.

Demgegenüber ist es insbesondere die Aufgabe der Erfindung, eine Ausrichtvorrichtung zum Ausrichten einer Führungsschiene in einem Aufzugschacht einer Aufzuganlage und ein Verfahren zur Montage einer Führungsschiene in einem Aufzugschacht einer Aufzuganlage vorzuschlagen, welche eine rationelle und dennoch genaue Montage bzw. Ausrichtung von Führungsschienen in einem Aufzugschacht ermöglichen. Erfindungsgemäss wird diese Aufgabe mit einer Ausrichtvorrichtung zum Ausrichten einer Führungsschiene in einem Aufzugschacht einer Aufzuganlage mit den Merkmalen des Anspruchs 1 und einem Verfahren zur Montage einer Führungsschiene in einem Aufzugschacht einer Aufzuganlage mit den Merkmalen des Oberbergriffs des Anspruchs 4 gelöst.

EP 2 873 640 A1 wird als nächstliegender Stand der Technik gegenüber dem Gegenstand des Anspruchs 1 angesehen. WO 2017/016780 A1 wird als nächstliegender Stand der Technik gegenüber dem Gegenstand des Anspruchs 4 angesehen.

Die Aufgabe wird durch eine Ausrichtvorrichtung zum Ausrichten einer Führungsschiene in einem Aufzugschacht einer Aufzuganlage gelöst, welche dazu eingerichtet ist, die Führungsschiene gegenüber einer mindestens drei voneinander beabstandete Punkte aufweisenden Markierung an einer Schachtwand des Aufzugschachts auszurichten. Die Ausrichtvorrichtung verfügt über ein Anlageteil mit einer Ausnehmung, welche über eine komplementäre Form einer Lauffläche der Führungsschiene verfügt und eine Peilvorrichtung, welche so ausgeführt und angeordnet ist, dass das Anlageteil in eine definierte Position gegenüber der Markierung an der Schachtwand gebracht werden kann. Die Peilvorrichtung weist eine Lasereinrichtung auf, welche mindestens drei voneinander beabstandete Punkte an die Schachtwand des Aufzugschachts projizieren kann. Das Anlageteil und die Peilvorrichtung können zusammen ein Bauteil bilden.

Die Ausrichtvorrichtung ist damit dazu ausgelegt, eine Führungsschiene an Markierungen an der Schachtwand auszurichten, die insbesondere von einer Montagevorrichtung automatisiert angebracht worden sind. Die an der Schachtwand angebrachten Markierungen müssen an die zur Ausrichtung der Führungsschiene verwendete Ausrichtvorrichtung angepasst sein.

Eine Führungsschiene weist insbesondere einen Fuss und einen Steg auf, die T-förmig zueinander angeordnet sind. Die Führungsschiene ist so im Aufzugschacht angeordnet, dass der Fuss der Führungsschiene zumindest mittelbar am Schienenträgeroberteil anliegt, also Richtung Schachtwand orientiert ist. Der Steg ist damit in Richtung Aufzugschacht orientiert. Er weist eine bearbeitete Lauffläche der Führungsschiene auf, die aus insgesamt drei Teil-Laufflächen zusammengesetzt ist. Sie besteht aus einer stirnseitigen Teil-Lauffläche, die hauptsächlich parallel zur Schachtwand verläuft, und zwei sich an die stirnseitige Teil-Lauffläche anschliessenden seitlichen Teil-Laufflächen. Die komplementäre Form der Ausnehmung des Anlageteils der Ausrichtvorrichtung bezieht sich dabei auf eine Ebene quer zur Haupterstreckungsrichtung des Aufzugschachts. Die Ausnehmung muss dabei nicht so ausgeführt sein, dass sie alle drei Teil-Laufflächen komplett aufnehmen kann. Es ist insbesondere wichtig, dass die Ausnehmung so ausgeführt ist, dass das Anlageteil so gegenüber der Führungsschiene angeordnet werden kann, dass die Führungsschiene durch die Ausnehmung verläuft und das Anlageteil an der kompletten stirnseitigen Teil-Lauffläche und zumindest an Teilen der seitlichen Teil-Laufflächen anliegt und so eine definierte Position des Anlageteils und damit der Ausrichtvorrichtung gegenüber der Lauffläche der Führungsschiene und damit gegenüber der gesamten Führungsschiene gegeben ist.

Die Lasereinrichtung verfügt insbesondere über drei Laser, die jeweils einen Laserstrahl aussenden können. Die Lasereinrichtung ist so an der Peilvorrichtung angeordnet, dass die Führungsschiene dann korrekt ausgerichtet ist, wenn die drei Laserstrahlen in einer vorgegebenen Weise bezüglich der Markierung an der Schachtwand ausgerichtet ist. Die Laser sind insbesondere so angeordnet, dass sie die genannten Punkte an die Schachtwand projizieren, an der die Führungsschiene befestigt wird. Die Ausrichtung ist insbesondere dann korrekt, wenn die Laserstrahlen der drei Laser genau auf drei voneinander beabstandete Punkte der Markierung auf der Schachtwand ausgerichtet sind. Dies ist besonders einfach kontrollierbar, womit eine besonders einfache und gleichzeitig genaue Ausrichtung der Führungsschienen ermöglicht wird. Es ist auch möglich, dass die Lasereinrichtung nur über einen Laser verfügt, der in drei verschiedene, definierte Positionen gebracht werden kann.

Es ist auch möglich, dass die Lasereinrichtung so ausgeführt ist, dass sie ein Dreieck an die Schachtwand projiziert. In diesem Fall entspricht jedes Eck des Dreiecks einem der genannten Punkte, die an die Schachtwand projiziert werden.

Die Ausrichtvorrichtung kann während eines Ausrichtvorgangs beispielsweise mit einer Klemmvorrichtung oder einem Magneten an der Führungsschiene befestigt werden.

In Ausgestaltung der Erfindung verfügt die Ausrichteinrichtung über eine langgestreckte Prüfmarkierung. Die Prüfmarkierung ist so ausgeführt, dass ein korrekter Verlauf einer an der Ausrichtvorrichtung befestigten Schnur geprüft werden kann. Wenn die Ausrichtvorrichtung im Aufzugschacht an der Führungsschiene korrekt anliegt, verläuft die Prüfmarkierung insbesondere hauptsächlich senkrecht zur Schachtwand. Die Schnur verbindet insbesondere zwei Ausrichtvorrichtungen bei der gleichzeitigen Ausrichtung zweier gegenüberliegenden Führungsschienen. Damit kann auf einfache und effektive Weise die Ausrichtung zweier gegenüberliegenden Führungsschienen überprüft werden.

Die oben genannte Aufgabe wird auch durch ein Verfahren zur Montage einer Führungsschiene in einem Aufzugschacht einer Aufzuganlage gelöst, bei welchem zuerst einige Montageschritte mit einer Montagevorrichtung ausgeführt werden, welche eine Trägerkomponente, eine Installationskomponente und eine Steuerungseinrichtung zum Ansteuern der Installationskomponente aufweist. Die Trägerkomponente ist dazu ausgelegt, relativ zum Aufzugschacht verlagert und in verschiedenen Höhen innerhalb des Aufzugschachts positioniert zu werden. Die Installationskomponente ist an der Trägerkomponente gehalten und dazu ausgelegt, einen Montageschritt im Rahmen des Installationsvorgangs zumindest teilautomatisch auszuführen. Erfindungsgemäss bestimmt die Steuerungseinrichtung ausgehend von einer Ist-Position der Montagevorrichtung und einer Soll-Position einer im Aufzugschacht zu installierenden Führungsschiene eine Position einer Markierung an einer Schachtwand des Aufzugschachts relativ zur Ist-Position der Montagevorrichtung. Ausgehend von dieser Markierung kann in einem folgenden Installationsschritt die Soll-Position der Führungsschiene bestimmt werden. Die genannte Markierung wird mit der Installationskomponente an der Schachtwand angebracht.

An die genannten Schritte schliessen sich die Schritte Ausrichten der Führungsschiene gegenüber der genannten Markierung und Fixieren der Führungsschiene an der Schachtwand an. Diese beiden Schritte werden insbesondere von einem Monteur von Hand ausgeführt.

Der Aufzugschacht verläuft insbesondere hauptsächlich in einer Haupterstreckungsrichtung. Unter der Haupterstreckungsrichtung des Aufzugschachts soll hier die Richtung verstanden werden, in der eine Aufzugkabine der fertig montierten Aufzuganlage verfahren wird. Die Haupterstreckungsrichtung verläuft also insbesondere vertikal, sie kann aber auch gegenüber der Vertikalen geneigt oder horizontal verlaufen. Die Haupterstreckungsrichtung muss dabei nicht zwingend über die gesamte Länge des Aufzugschachts entlang einer einzigen Gerade verlaufen. Es ist beispielsweise auch möglich, dass sich der Verlauf der Haupterstreckungsrichtung aus Geradenstücken zusammensetzt, deren Übergangsbereiche auch ausgerundet sein können.

Die Markierung an der Schachtwand kann beispielsweise mit einem Stift, einem Stempel. einer Reissnadel, einem Bohrer, einem Fräser oder einem leistungsstarken Laser angebracht werden. Das dazu notwendige Werkzeug ist dabei insbesondere an der Installationskomponente angeordnet und damit Teil der Installationskomponente.

In Ausgestaltung der Erfindung wird zum Ausrichten der Führungsschiene gegenüber der genannten Markierung eine oben beschriebene Ausrichtvorrichtung an der Führungsschiene angeordnet und die drei von der Lasereinrichtung der Peilvorrichtung an die Schachtwand projizierten Punkte in Deckung mit einer Markierung an der Schachtwand gebracht. Damit kann die Führungsschiene besonders einfach und genau ausgerichtet werden.

In Ausgestaltung der Erfindung werden mittels der genannten Markierung an der Schachtwand wenigstens drei voneinander beabstandete Punkte markiert, wobei die Punkte insbesondere nicht auf einer gemeinsamen Geraden liegen. Durch die Markierung von drei voneinander beabstandeten Punkten ist die Position der Führungsschiene eindeutig festgelegt. Die Markierung kann beispielsweise aus drei separaten Punkten oder Kreuzen bestehen. Es ist auch möglich, dass die Markierung als ein Dreieck ausgeführt ist, dessen Ecken die genannten drei Punkte kennzeichnen. Dabei ist es auch möglich, dass an den genannten Enden zusätzliche Markierungselemente, wie beispielsweise weitere Linien angeordnet sind. Beispielsweise ist es denkbar, dass kein gesamtes Dreieck an der Schachtwand angebracht wird, sondern nur die Ecken und jeweils ein kurzes Stück der Seiten des Dreiecks. Ausserdem ist es möglich, dass die Markierung aus einer Kombination aus einem Punkt und einer Line ausgeführt ist, deren Enden die zwei weiteren Punkte kennzeichnen Darüber hinaus sind auch Mischformen der genannten Ausführungen und andere, vom Fachmann als sinnvoll erachtete Markierungen denkbar.

In Ausgestaltung der Erfindung wird die Ist-Position der Montagevorrichtung und die Soll-Position der zu installierenden Führungsschiene auf Basis wenigstens eines, insbesondere zwei im Aufzugschacht angeordneten Referenzelements bestimmt, welches insbesondere in Haupterstreckungsrichtung des Aufzugschachts verläuft. Die Referenzelemente sind insbesondere als Schnüre ausgeführt, die hauptsächlich in Haupterstreckungsrichtung im Aufzugschacht gespannt sind. Durch das Anbringen der Markierungen an der Schachtwand des Aufzugschachts auf Basis der Referenzelemente wird quasi die Position der Referenzelemente im Aufzugschacht auf die Schachtwand übertragen.

In Ausgestaltung der Erfindung werden gleichzeitig zwei gegenüberliegende Führungsschienen ausgerichtet. Unter einer gleichzeitigen Ausrichtung soll auch verstanden werden, dass zuerst eine Führungsschiene ausgerichtet wird und anschliessend die zweite Führungsschiene auch gegenüber der ersten Führungsschiene ausgerichtet wird. Mit der Ausrichtung der zweiten Führungsschiene kann insbesondere die Ausrichtung der ersten Führungsschiene überprüft und gegebenenfalls korrigiert werden. Die zweite, gegenüberliegende Führungsschiene wird aber stets vor einer weiteren, an die erste Führungsschiene anschliessende Führungsschiene ausgerichtet. Eine Aufzugkabine wird üblicherweise im Betrieb an zwei gegenüberliegenden Führungsschienen geführt. Damit ist der Fahrkomfort von der Ausrichtung beider Führungsschienen und insbesondere auch von der Ausrichtung der Führungsschienen zueinander abhängig. Durch die beschriebene Ausrichtung zweier gegenüberliegender Führungsschienen kann auch eine exakte Ausrichtung der Führungsschienen zueinander ermöglicht werden.

Die Ausrichtung zweier gegenüberliegenden Führungsschienen gegenüber der Markierung an der jeweiligen Schachtwand erfolgt insbesondere mittels jeweils einer Ausrichtvorrichtung, welche mittels einer Schnur verbunden sind. Zur Sicherstellung der korrekten Ausrichtung der beiden Führungsschienen zueinander wird ein korrekter Verlauf der genannten Schnur geprüft. Dazu können eine oder beide Ausrichtvorrichtungen eine langestreckte Prüfmarkierung, beispielsweise in Form einer Nut oder eines Schlitzes aufweisen, über der die Schnur bei korrekter Ausrichtung der beiden Führungsschienen zueinander verlaufen muss. Damit ist eine Prüfung der korrekten Ausrichtung der beiden Führungsschienen zueinander besonders einfach und sicher möglich.

In Ausgestaltung der Erfindung wird ein Abstand der beiden gegenüberliegenden Führungsschienen insbesondere quer zur Haupterstreckungsrichtung des Aufzugschachts überprüft. Um die Aufzugkabine korrekt führen zu können, müssen die Führungsschienen einen vorgegebenen Abstand aufweisen. Durch die Prüfung dieses Abstands wird ein guter Fahrkomfort der Aufzugkabine ermöglicht.

Die Überprüfung des genannten Abstands kann beispielsweise mittels einer so genannten Spurlehre erfolgen. Die Spurlehre ist ein Stab, mit einer definierten Länge, die dem gewünschten Abstand der Führungsschienen entspricht.

Die Montagevorrichtung, mit der Markierungen an der Schachtwand angebracht werden können, verfügt über eine Trägerkomponente, eine Installationskomponente und zumindest eine Steuerungseinrichtung zumindest zum Ansteuern der Installationskomponente. Die Trägerkomponente ist dazu ausgelegt, relativ zum Aufzugschacht verlagert und in verschiedenen Höhen innerhalb des Aufzugschachts positioniert zu werden. Die Installationskomponente ist an der Trägerkomponente gehalten und dazu ausgelegt, einen Montageschritt im Rahmen des Installationsvorgangs zumindest teilautomatisch auszuführen. Die Steuerungseinrichtung ist dazu vorgesehen, ausgehend von einer Ist-Position der Montagevorrichtung und einer Soll-Position eines im Aufzugschacht zu installierenden Führungsschiene eine Position einer Markierung an einer Schachtwand des Aufzugschachts relativ zur Ist-Position der Montagevorrichtung zu bestimmen, ausgehend von der in einem folgenden Installationsschritt die Soll-Position der Führungsschiene bestimmt werden kann. Die Installationskomponente ist dazu ausgelegt, die genannte Markierung an der Schachtwand anzubringen. Das Anbringen der genannten Markierung ist damit auch ein Montageschritt im Rahmen eines Installationsvorgangs in einem Aufzugschacht einer Aufzuganlage. Die Markierung wird insbesondere an der Schachtwand angebracht, an der die Führungsschiene fixiert wird. Es ist aber auch denkbar, die Markierung an einer anderen Schachtwand anzubringen.

Die Trägerkomponente kann in unterschiedlicher Weise ausgestaltet sein. Beispielsweise kann die Trägerkomponente als einfache Plattform, Gestell, Gerüst, Kabine oder Ähnliches ausgebildet sein. Die Verlagerung der Trägerkomponente erfolgt insbesondere mittels einer Verlagerungskomponente, beispielsweise einer Winde, die in einem Schachtkopf des Aufzugschachts angeordnet sein kann. Die Trägerkomponente kann eine Fixierkomponente aufweisen, welche dazu ausgelegt ist, die Trägerkomponente innerhalb des Aufzugschachts in einer Richtung quer zur Vertikalen, d.h. beispielsweise in einer horizontalen bzw. seitlichen Richtung, zu fixieren. Diese Fixierung kann als eine Positionierung bezeichnet werden. Die Trägerkomponente ist beispielsweise wie eine Trägerkomponente der in der WO 2017/016783 A1 beschriebenen Montagevorrichtung ausgeführt.

Die Installationskomponente kann insbesondere mechatronisch sein, das heisst, zusammenwirkende mechanische, elektronische und informationstechnische Elemente oder Module aufweisen. Beispielsweise kann die Installationskomponente eine geeignete Mechanik aufweisen, um z.B. innerhalb eines Montageschritts Werkzeuge handhaben zu können. Die Werkzeuge können dabei von der Mechanik beispielsweise geeignet an eine Montageposition gebracht werden und/oder während eines Montageschrittes geeignet geführt werden. Alternativ kann die Installationskomponente auch selbst über eine geeignete Mechanik verfügen, die ein Werkzeug ausbildet.

Die mechatronische Installationskomponente weist insbesondere einen Industrieroboter auf. Unter einem Industrieroboter kann eine universelle, meist programmierbare Maschine zur Handhabung, Montage und/oder Bearbeitung von Werkstücken und Bauteilen verstanden werden. Solche Roboter sind für einen Einsatz in einem industriellen Umfeld konzipiert und werden bisher beispielsweise bei der industriellen Fertigung komplexer Güter in großen Stückzahlen, beispielsweise bei der Automobilfertigung, eingesetzt. Der Industrieroboter ist insbesondere dazu ausgelegt, an seinem freitragenden Ende mit verschiedenen Montagewerkzeugen gekoppelt zu werden.

Die Installationskomponente ist beispielsweise wie eine Installationskomponente der in der WO 2017/016783 A1 beschriebenen Montagevorrichtung ausgeführt.

Es ist auch möglich, dass die Installationskomponente hauptsächlich oder ausschliesslich zum Anbringen der genannten Markierungen an der Schachtwand vorgesehen ist. In diesem Fall ist eine mechanische Komponente nicht zwingend notwendig. Es wäre beispielsweise denkbar, dass die Markierungen mit einem energiereichen Laserstrahl vorgenommen werden. In diesem Fall ist für die Positionierung der Montagevorrichtung im Aufzugschacht keine oder nur eine sehr einfache Fixiervorrichtung notwendig.

Die genannte Steuerungseinrichtung steuert zumindest die Installationskomponente an. Die Steuerungseinrichtung wird bei der Vorbereitung des Installationsvorgangs so programmiert, dass im Rahmen des Installationsvorgangs zumindest ein Montageschritt teilautomatisch oder vollautomatisch von der Montagevorrichtung durchgeführt werden kann. Die Montagevorrichtung kann über mehr als eine Steuerungseinrichtung verfügen, die signaltechnisch miteinander verbunden sind.

Damit die Steuerungseinrichtung die Ist-Position der Montagevorrichtung bestimmen kann, weist die Montagevorrichtung insbesondere eine Positionierungskomponente auf. Die Steuerungseinrichtung kann mit Hilfe der Positionierungskomponente die Position der Montagevorrichtung auf unterschiedliche Arten bestimmen. Beispielsweise ist eine Positionsbestimmung unter Einsatz optischer Messprinzipien vorstellbar. Zum Beispiel können Laserabstandsmessgeräte Abstände zwischen der Positionierungskomponente und Wänden des Aufzugschachts oder zwischen der Positionierungskomponente und im Aufzugschacht angeordneten Referenzelementen messen. Auch andere optische Messverfahren wie stereoskopische Messverfahren oder auf Triangulation basierende Messverfahren sind vorstellbar. Neben optischen Messverfahren sind auch verschiedenste andere Positionsbestimmungsverfahren vorstellbar, beispielsweise basierend auf Radarreflexionen oder Ähnlichem. Es auch ein Messsystem genutzt werden, das eine Höheninformation auf einem im Aufzugschacht angeordneten und in Haupterstreckungsrichtung verlaufenden Magnetband oder einem Band mit optischen auswertbaren Informationen, auswertet. Die Positionierungskomponente kann beispielsweise wie die Positionierungskomponente der in der nicht vorveröffentlichten internationalen Anmeldung der Anmelderin mit der Anmeldenummer PCT/EP2017/057259 ausgeführt sein.

Die Soll-Position der im Aufzugschacht zu installierenden Führungsschiene wird insbesondere bei der Programmierung der Steuerungseinrichtung festgelegt. Die Soll-Position wird insbesondere bezüglich eines Referenzelements im Aufzugschacht festgelegt. Es ist aber auch möglich, dass zur Festlegung der Soll-Position ein digitales Modell des Aufzugschachts verwendet wird. Ausgehend von dieser Soll-Position und der Ist-Position der Montagevorrichtung bestimmt die Steuerungseinrichtung die Position von Markierungen, welche an der Schachtwand angebracht werden und in einem folgenden Installationsschritt die Bestimmung der Soll-Position der Führungsschiene ermöglichen. Die Soll-Position der Führungsschiene wird dabei relativ zur Ist-Position der Montagevorrichtung bestimmt. Die relative Lage der Markierungen an der Schachtwand zur Soll-Position der Führungsschiene ist dabei davon abhängig, wie die Ausrichtung der Führungsschiene gegenüber der Markierung erfolgt. Es ist beispielsweise möglich, dass eine spezielle Ausrichtvorrichtung, insbesondere eine erfindungsgemässe Ausrichtvorrichtung benutzt wird. Die Position der Markierungen wird an die Art der Ausrichtung, der Ausführung des Schachtmaterials und ggf. an die Art der Ausrichtvorrichtung angepasst.

Statt Markierungen für die Ausrichtung einer Führungsschiene an einer Schachtwand anzubringen, können von der Montagevorrichtung auch Markierungen für die Ausrichtung eines Schienenbügelunterteils an einer Schachtwand angebracht werden. Die Montagevorrichtung führt dann auch ein entsprechendes Verfahren aus, bei dem solche Markierungen an einer Schachtwand eines Aufzugschachts angebracht werden.

Das Schienenbügelunterteil kann insbesondere als ein Omega-Bracket ausgeführt sein. Die Position des Schienenbügeloberteils eines Omega-Brackets gegenüber den Schienenbügelunterteilen kann nur in einer Richtung senkrecht zur Schachtwand verändert werden. Sobald die Schienenbügelunterteile fest an der Schachtwand fixiert sind, kann zum Ausrichten der Führungsschiene nur noch die Position des Schienenbügeloberteils zu den Schienenbügelunterteilen senkrecht zur Schachtwand verändert werden. Damit müssen die Schienenbügelunterteile so an der Schachtwand fixiert werden, dass nur mit der beschriebenen Positionsänderung des Schienenbügeloberteils zu den Schienenbügelunterteilen die Soll-Position der am Omega-Bracket gehaltenen Führungsschiene einstellbar ist. Die Schienenbügelunterteile und damit das Omega-Bracket müssen damit an einer bestimmten Soll-Position an der Schachtwand fixiert werden, welche mit einer von der Montagevorrichtung an der Schachtwand angebrachten Markierung gekennzeichnet wird.

In diesem Fall ist die Montagevorrichtung insbesondere dann vorteilhaft einsetzbar, wenn die Montagevorrichtung automatisiert Löcher in die Schachtwand bohrt, Befestigungselemente beispielsweise Schrauben oder Ankerbolzen einbringt und eine entsprechende Markierung an der Schachtwand anbringt. Zumindest ein Teil der Markierung wird insbesondere so angebracht, dass eine Kante des Schienenbügelunterteils entlang einer Markierung ausgerichtet werden muss. Das Fixieren und Ausrichten des Schienenbügelunterteils bzw. des ganzen Omega-Brackets an der von der Montagevorrichtung angebrachten Markierung erfolgt anschliessend von einem Monteur von Hand. Die Montagevorrichtung bohrt insbesondere zwei in Haupterstreckungsrichtung des Aufzugschachts voneinander beabstandete Löcher und bringt darin Befestigungselemente ein. Diese beiden Löcher bzw. die Befestigungselemente bilden dabei zwei Punkte der genannten Markierung an der Schachtwand. Damit ist es ausreichend, wenn die Montagevorrichtung einen weiteren Punkt oder eine Linie markiert, die von den genannten Löchern quer zur Haupterstreckungsrichtung des Aufzugschachts beabstandet ist. Schienenbügelunterteile weisen meist Langlöcher für Befestigungselemente auf, die ein Verschieben der Schienenbügelunterteile gegenüber Befestigungselementen quer zur Haupterstreckungsrichtung des Aufzugschachts erlauben. Bei der Verwendung von Ankerbolzen kann das Schienenbügelunterteil auf die Ankerbolzen aufgesetzt und anschliessend quer zur Haupterstreckungsrichtung des Aufzugschachts bis zum Erreichen der Markierung an der Schachtwand und damit bis zum Erreichen der Soll-Position des Schienenbügelunterteils verschoben werden. Sobald die Soll-Position erreicht ist, wird das Schienenbügelunterteil mittels Muttern der Ankerbolzen fest an der Schachtwand fixiert. Die Muttern werden dazu auf ein Gewinde aufgeschraubt, das nach dem Einsetzen aus dem Bohrloch herausragt.

Damit ist ein Verfahren zur Montage eines Schienenbügelunterteils, insbesondere eines Omega-Brackets, möglich, bei welchem zuerst einige Montageschritte mit einer Montagevorrichtung ausgeführt werden, welche eine Trägerkomponente, eine Installationskomponente und eine Steuerungseinrichtung zum Ansteuern der Installationskomponente aufweist. Die Trägerkomponente ist dazu ausgelegt, relativ zum Aufzugschacht verlagert und in verschiedenen Höhen innerhalb des Aufzugschachts positioniert zu werden. Die Installationskomponente ist an der Trägerkomponente gehalten und dazu ausgelegt, einen Montageschritt im Rahmen des Installationsvorgangs zumindest teilautomatisch auszuführen. Die Steuerungseinrichtung bestimmt ausgehend von einer Ist-Position der Montagevorrichtung und einer Soll-Position des im Aufzugschacht zu installierenden Schienenbügelunterteils eine Position einer Markierung an einer Schachtwand des Aufzugschachts relativ zur Ist-Position der Montagevorrichtung. Ausgehend von dieser Markierung kann in einem folgenden Installationsschritt die Soll-Position des Schienenbügelunterteils bestimmt werden. Die genannte Markierung wird mit der Installationskomponente an der Schachtwand angebracht. Anschliessend wird das Schienenbügelunterteil gegenüber der genannten Markierung ausgerichtet und an der Schachtwand fixiert. Diese beiden letzten Schritte werden insbesondere von einem Monteur von Hand ausgeführt.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Die Zeichnungen sind lediglich schematisch und nicht massstabsgetreu.

Dabei zeigen:
- Fig. 1: eine perspektivische Ansicht eines Aufzugschachts einer Aufzuganlage mit einer darin aufgenommenen Montagevorrichtung,
- Fig. 2: eine perspektivische Ansicht einer Montagevorrichtung,
- Fig. 3: eine an einer Führungsschiene angeordnete Ausrichtvorrichtung in einer Seitenansicht,
- Fig. 4: die Anordnung aus Fig. 3 in einer Sicht von oben,
- Fig. 5: einen Schienenbügel in Form eines Omega-Brackets an einer Schachtwand mit einer Markierung in einer Draufsicht und
- Fig. 6: der Schienenbügel aus Fig. 5 in einer Sicht von oben.

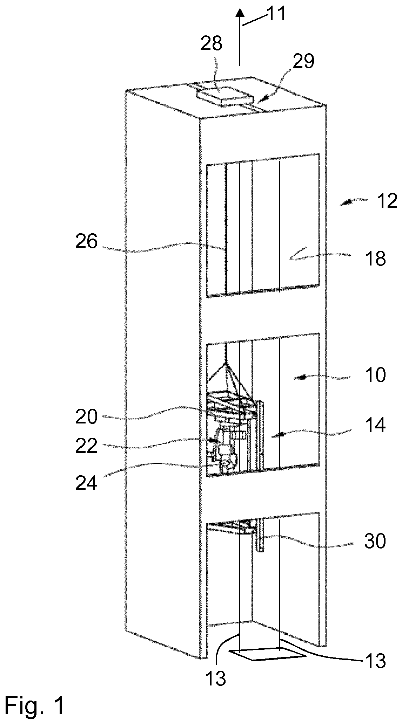

In Fig. 1 ist eine in einem Aufzugschacht 10 einer Aufzuganlage 12 angeordnete Montagevorrichtung 14 dargestellt, mittels welcher Löcher in eine Schachtwand 18 gebohrt, Ankerbolzen in die Löcher eingebracht und Markierungen für eine spätere Ausrichtung von Schachtmaterial an den Schachtwänden 18 angebracht werden können. Der Aufzugschacht 10 erstreckt sich in einer Haupterstreckungsrichtung 11, die in der Fig. 1 vertikal ausgerichtet ist. Mit den nicht dargestellten Ankerbolzen kann in einem späteren Montageschritt Schachtmaterial, beispielsweise in Form von Schienenbügelunterteilen an der Schachtwand 18 fixiert werden. Diese Fixierung wird insbesondere von einem Monteur von Hand durchgeführt.

Die Montagevorrichtung 14 weist eine Trägerkomponente 20 und eine mechatronische Installationskomponente 22 auf. Die Trägerkomponente 20 ist als Gestell ausgeführt, an dem die mechatronische Installationskomponente 22 montiert ist. Dieses Gestell weist Abmessungen auf, die ermöglichen, die Trägerkomponente 20 innerhalb des Aufzugschachts 10 vertikal zu verlagern, das heisst beispielsweise zu unterschiedlichen vertikalen Positionen an verschiedenen Stockwerken innerhalb eines Gebäudes zu verfahren. Die mechatronische Installationskomponente 22 ist im dargestellten Beispiel als Industrieroboter 24 ausgeführt, der nach unten hängend an dem Gestell der Trägerkomponente 20 angebracht ist. Ein Arm des Industrieroboters 24 kann dabei relativ zu der Trägerkomponente 20 bewegt werden und beispielsweise hin zur Schachtwand 18 des Aufzugschachts 10 verlagert werden.

Die Trägerkomponente 20 ist über ein als Tragmittel 26 dienendes Stahlseil mit einer Verlagerungskomponente 28 in Form einer motorisch angetriebenen Seilwinde verbunden, welche oben an dem Aufzugschacht 10 an einer Haltestelle 29 an der Decke des Aufzugschachts 10 angebracht ist. Mithilfe der Verlagerungskomponente 28 kann die Montagevorrichtung 14 innerhalb des Aufzugschachts 10 in Haupterstreckungsrichtung 11 des Aufzugschachts 10, also vertikal über eine gesamte Länge des Aufzugschachts 10 hin verlagert werden.

Die Montagevorrichtung 14 weist ferner eine Fixierkomponente 30 auf, mithilfe derer die Trägerkomponente 20 innerhalb des Aufzugschachts 10 in seitlicher Richtung, das heisst in horizontaler Richtung, fixiert werden kann.

Im Aufzugschacht 10 sind über dessen gesamte Länge zwei Referenzelemente 13 in Form von Schnüren gespannt, die entlang der Haupterstreckungsrichtung 11 ausgerichtet sind. Die Referenzelemente 13 werden von einem Monteur im Aufzugschacht 10 angebracht und bilden die Referenz für die Ausrichtung und Montage von Führungsschienen der Aufzuganlage 12. Die Führungsschienen müssen damit in montiertem Zustand parallel zu den Referenzelementen 13 und in einem bestimmten Abstand zu den Referenzelementen 13 verlaufen.

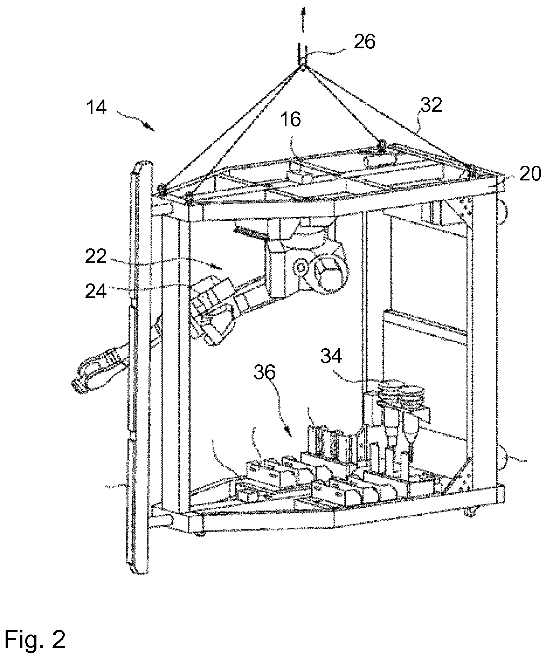

Fig. 2 zeigt eine vergrößerte Ansicht einer Montagevorrichtung 14.

Die Trägerkomponente 20 ist als käfigartiges Gestell ausgebildet, bei dem mehrere horizontal und vertikal verlaufende Holme eine mechanisch belastbare Struktur bilden.

Oben an der käfigartigen Trägerkomponente 20 sind Halteseile 32 angebracht, welche mit dem Tragmittel 26 verbunden werden können.

In der dargestellten Ausführungsform ist die mechatronische Installationskomponente 22 mithilfe eines Industrieroboters 24 ausgeführt. In dem dargestellten Beispiel ist der Industrieroboter 24 mit mehreren um Schwenkachsen verschwenkbaren Roboterarmen ausgestattet. Beispielsweise kann der Industrieroboter mindestens sechs Freiheitsgrade aufweisen, das heisst, ein von dem Industrieroboter 24 geführtes Montagewerkzeug 34 kann mit sechs Freiheitsgraden bewegt werden, das heisst beispielsweise mit drei Rotationsfreiheitsgraden und drei Translationsfreiheitsgraden. Beispielsweise kann der Industrieroboter als Vertikal-Knickarmroboter, als Horizontal-Knickarmroboter oder als SCARA-Roboter oder als kartesischer Roboter bzw. Portalroboter ausgeführt sein.

Der Industrieroboter 24 und damit die Installationskomponente 22 wird von einer an der Trägerkomponente 20 angeordnete Steuerungseinrichtung 16 angesteuert.

Der Roboter kann an seinem freitragenden Ende mit verschiedenen Montagewerkzeugen 34 gekoppelt werden, womit die Werkzeige Teil der Installationskomponente 22 werden. Die Montagewerkzeuge 34 können sich hinsichtlich ihrer Auslegung und ihres Einsatzzweckes unterscheiden. Die Montagewerkzeuge 34 können an der Trägerkomponente 20 derart gehalten werden, dass das freitragende Ende des Industrieroboters 24 an sie herangefahren werden und mit einem von ihnen gekoppelt werden kann. Der Industrieroboter 24 kann hierzu beispielsweise über ein Werkzeugwechselsystem verfügen, das so ausgebildet ist, dass es mindestens die Handhabung mehrerer solcher Montagewerkzeuge 34 ermöglicht.

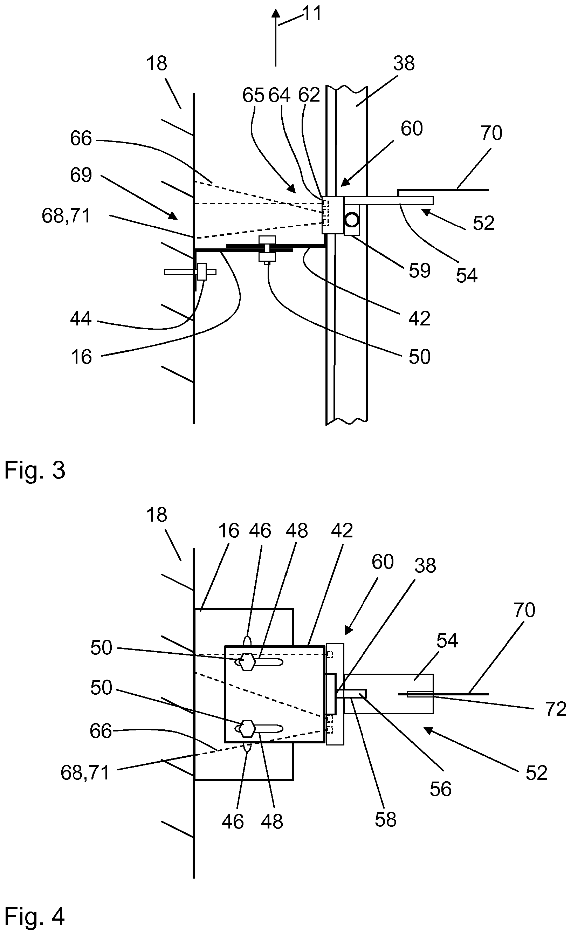

Eines der Montagewerkzeuge 34 ist als Sensor, beispielsweise als Laserscanner ausgeführt, mittels welchem von der Steuerungseinrichtung 16 die relative Lage der Trägerkomponente 20 gegenüber den Referenzelementen 13 bestimmt werden kann. Dies kann beispielsweise mit einem Verfahren durchgeführt werden, das in der nicht vorveröffentlichten internationalen Anmeldung der Anmelderin mit der Anmeldenummer PCT/EP2017/057259 beschrieben ist. Aus der relativen Lage der Trägerkomponente 20 gegenüber den Referenzelementen 13 kann die Position der Trägerkomponente 20 und damit die Ist-Position der Montagevorrichtung 14 im Aufzugschacht 10 ermittelt werden. Ausgehend von der Position der Trägerkomponente 20 kann bestimmt werden, an welchen Stellen der Schachtwand 18 ein Schachtmaterial angeordnet werden soll. Damit wird die Soll-Position des zu installierenden Schachtmaterials bestimmt. Ausgehend von der Forderung, dass die montierten Führungsschienen parallel zu den Referenzelementen 13 und in einem bestimmten Abstand zu ihnen verlaufen müssen, kann eine Position einer Markierung an der Schachtwand 18 bestimmt werden, die für die Ausrichtung der Führungsschiene genutzt wird. Auf die Ausrichtung der Führungsschiene wird im Zusammenhang mit den Fig. 3 und 4 genauer eingegangen. Die Position der Markierung wird dabei relativ zur Ist-Position der Montagevorrichtung 14 bestimmt.

Die Position der Trägerkomponente 20 im Aufzugschacht 10 kann auch mit Hilfe eines digitalen Modells der Aufzuganlage 12 bestimmt werden. Dazu muss der Aufzugschacht 10 beispielsweise mittels eines Laserscanners vermessen werden.

Eines der Montagewerkzeuge 34 ist als Bohrwerkzeug, ähnlich einer Bohrmaschine, ausgestaltet. Durch Kopplung des Industrieroboters 24 mit einem solchen Bohrwerkzeug kann die Installationskomponente 22 dazu ausgestaltet werden, ein zumindest teilweise automatisiert gesteuertes Bohren von Befestigungslöchern in einer der Schachtwände 18 des Aufzugschachts 10 zu ermöglichen. Das Bohrwerkzeug kann hierbei von dem Industrieroboter 24 derart bewegt und gehandhabt werden, dass das Bohrwerkzeug mit einem Bohrer an einer vorgesehenen Position Löcher in die Schachtwand 18 des Aufzugschachts 10 bohrt, in die später Befestigungselemente insbesondere in Form von Ankerbolzen zur Fixierung von Schienenbügelunterteilen eingebracht werden.

Ein weiteres Montagewerkzeug 34 ist als Einschlagvorrichtung ausgestaltet, um zumindest teilautomatisch Ankerbolzen in zuvor gebohrte Löcher in der Schachtwand 18 des Aufzugschachts 10 einzubringen.

Die Fixierung des Schachtmaterials mittels der Ankerbolzen in den Schachtwänden 18 erfolgt in einem späteren Montageschritt durch einen Monteur von Hand.

Ein weiteres Montagewerkzeug 34 ist als ein Markierwerkzeug, beispielsweise in Form eines Stifts oder Stempels ausgeführt, um eine Markierung (69 in Fig. 4) an einer Schachtwand 18 anzubringen. Diese Markierung wird für die spätere manuelle Ausrichtung von Schachtmaterial in Form von Schienenbügelunterteilen und/oder Führungsschienen genutzt, indem ausgehend von der Markierung die Soll-Position des Schachtmaterials bestimmt wird.

An der Trägerkomponente 20 kann ferner eine Magazinkomponente 36 vorgesehen sein. Die Magazinkomponente 36 kann dazu dienen, Ankerbolzen zu lagern und der Installationskomponente 22 bereitzustellen

Im dargestellten Beispiel kann der Industrieroboter 24 beispielsweise automatisch einen Ankerbolzen aus der Magazinkomponente 36 greifen und beispielsweise mit einem als Einschlagvorrichtung ausgebildeten Montagewerkzeug 34 in zuvor gebohrte Löcher in der Schachtwand 18 einschlagen.

Nach dem Einschlagen der Ankerbolzen in die Löcher in der Schachtwand 18 des Aufzugschachts 10 kann auf das als Markierungswerkzeug ausgebildete Montagewerkzeug 34 umkonfiguriert werden und eine Markierung in Form von Punkten oder Linien an einer Schachtwand 18 angebracht werden.

Sobald Markierungen an den Schachtwänden 18 angebracht sind, werden die Referenzelemente 13 für die Ausrichtung der Führungsschienen nicht mehr benötigt.

Nachdem alle Löcher im Aufzugschacht gebohrt und mit Ankerbolzen versehen worden sind, sowie alle Markierungen für die Ausrichtung des Schachtmaterials an den Schachtwänden angebracht worden sind, wird die Installation durch einen Monteur von Hand weitergeführt.

Der Monteur montiert zunächst die Schienenbügelunterteile mittels der Ankerbolzen an der Schachtwand. Er kann dabei zunächst alle Schienenbügelunterteile im Aufzugschacht montieren dann über diese die Schienenbügeloberteile, sowie die Führungsschienen an den Schachtwänden ausrichten und fixieren. Es ist auch möglich, dass er abschnittsweise vorgeht.

Zunächst wird in Zusammenhang mit den Fig. 3 und 4 das Vorgehen bei der Montage einer Führungsschiene mittels eines "normalen" Schienenbügels beschrieben, der nur aus einem einzigen Schienenbügelunterteil und einem Schienenbügeloberteil besteht.

Zunächst wird eine Führungsschiene 38 provisorisch an einer Schachtwand 18 befestigt. Dazu wird ein Schienenbügelunterteil 16 mittels zweier Ankerbolzen 44 an der Schachtwand 18 fixiert. Ausserdem wird die Führungsschiene 38 über nicht dargestellte Schienenclips an einem Schienenbügeloberteil 42, welches einen hauptsächlich L-förmigen Querschnitt aufweist, befestigt. Der längere Teil des Schienenbügeloberteils 42 liegt auf dem Schienenbügelunterteil 16 auf, das ebenfalls einen hauptsächlich L-förmigen Querschnitt aufweist. Um die beiden Schienenbügelteile 16, 42 miteinander verbinden zu können, weist das Schienenbügelunterteil 16 zwei Langlöcher 46 auf, die in einer Linie hauptsächlich parallel zur Schachtwand 18 verlaufen. Das Schienenbügeloberteil 42 weist ebenfalls zwei Langlöcher 48 auf, die parallel zueinander senkrecht zur Schachtwand 18 verlaufen. Die Langlöcher 46 und 48 sind so angeordnet, dass jeweils eine Schraube-Mutter-Verbindung 50 durch die Langlöcher 46, 48 durchgeführt werden kann und so die beiden Schienenbügelteile 16, 42 miteinander verbunden werden können. Durch die insgesamt vier Langlöcher 46, 48 kann die relative Lage der beiden Schienenbügelteile 16, 42 zueinander verändert und so die mit dem Schienenbügeloberteil 42 fest verbundene Führungsschiene 38 ausgerichtet werden. Zunächst werden die Schraube-Mutter-Verbindungen 50 nur so fest angezogen, dass die beiden Schienenbügelteile 16, 42 zwar verbunden, aber noch gegeneinander beweglich sind.

Zum Ausrichten der Führungsschiene 38 wird eine Ausrichtvorrichtung 52 verwendet. Die Ausrichtvorrichtung 52 weist ein Anlageteil 54 auf, das über eine Ausnehmung 56 verfügt. Die Ausnehmung 56 hat eine komplementäre Form einer Lauffläche 58 der Führungsschiene 38. Damit kann das Anlageteil 54 wie in den Fig. 3 und 4 dargestellt so an die Führungsschiene 38 angelegt werden, dass die Lauffläche 58 der Führungsschiene 38 durch die Ausnehmung 56 verläuft und ohne Spiel am Rand der Ausnehmung 56 anliegt. In diesem Zustand hat das Anlageteil 54 und damit die Ausrichtvorrichtung 52 eine definierte Position gegenüber der Führungsschiene 38. Damit diese Position sicher beibehalten werden kann, weist die Ausrichtvorrichtung 52 eine nur schematisch dargestellte Klemmvorrichtung 59 auf, mittels welcher die Ausrichtvorrichtung 52 an der Führungsschiene 38 festgeklemmt werden kann.

Am Anlageelement 54 ist eine Peilvorrichtung 60 befestigt, welche einen hauptsächlich U-förmigen Querschnitt aufweist und die Führungsschiene 38 umfasst. An der in Richtung Schachtwand 18 orientierten Seite 62 sind drei Laser 64 angeordnet, die jeweils einen Laserstrahl 66 in Richtung Schachtwand 18 aussenden. Die Laser 64 sind so ausgerichtet, dass die Laserstrahlen 66 in unterschiedlichen Winkeln aus der Peilvorrichtung 60 austreten und drei Punkte 71 an die Schachtwand 18 projizieren. Die drei Laser 64 bilden damit zusammen eine Lasereinrichtung 65. An der Schachtwand 18 sind drei Punkte 68 angeordnet, die zusammen eine Markierung 69 bilden. Die Punkte 68 wurden in einem vorhergehenden Montageschritt von einer Montagevorrichtung gemäss Fig. 1 und 2 an der Schachtwand 18 angebracht und sind so positioniert, dass die Führungsschiene 38 dann korrekt ausgerichtet ist, wenn die Laserstrahlen 66 genau auf die Punkte 68 ausgerichtet sind, also die von den Lasern 64 an die Schachtwand 18 projizierten Punkte 71 genau auf den Punkten 68 der Markierung 69 liegen. Zum Ausrichten der Führungsschiene 38 muss damit ein Monteur die Position des Schienenbügeloberteils 42 und damit der Führungsschiene 38 gegenüber dem Führungsschienenunterteils 16 so einstellen, dass die Laserstrahlen 66 genau auf die Punkte 68 treffen. Ist dies der Fall, zieht der Monteur die Schraube-Mutter-Verbindungen 50 so fest an, dass keine Bewegung zwischen den beiden Schienenbügelteilen 16, 42 mehr möglich ist. Die Führungsschiene 38 ist damit fest an der Schachtwand 18 fixiert und ausgerichtet.

Eine besonders exakte Ausrichtung von Führungsschienen wird erreicht, wenn gleichzeitig zwei gegenüberliegende Führungsschienen 38 wie beschrieben ausgerichtet und an der jeweiligen Schachtwand 18 fixiert werden. Die korrekte Ausrichtung kann dabei zusätzlich geprüft werden.

Dazu sind die beiden Ausrichtvorrichtungen 52 mit einer Schnur 70 verbunden. Bei korrekter Ausrichtung der beiden gegenüberliegenden Führungsschienen 38 muss die Schnur bei beiden Prüfvorrichtungen 52 exakt über einer langgestreckten Prüfmarkierung in Form einer Nut 72 verlaufen. Dies wird vom Monteur geprüft.

Der Monteur prüft ausserdem mit einer so genannten Spurlehre, einem Stab mit definierter Länge, ob die beiden Führungsschienen den korrekten Abstand zueinander aufweist. Dies ist dann der Fall, wenn die Spurlehre horizontal genau zwischen die beiden gegenüberliegenden Führungsschienen passt.

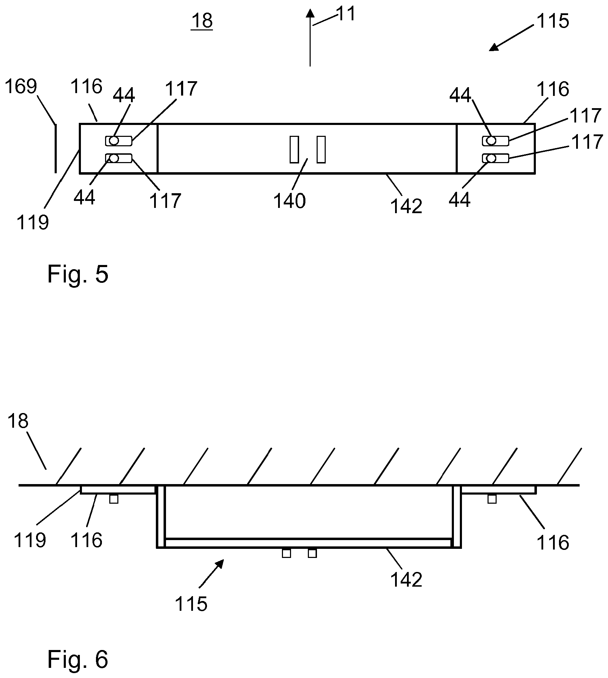

Im Folgenden wird in Zusammenhang mit den Fig. 5 und 6 das Vorgehen bei der Montage eines Schienenbügels in Form eines Omega-Brackets an einer Schachtwand beschrieben.

Ein Omega-Bracket 115 besteht aus zwei Schienenbügelunterteilen 116 und einem zwischen den Schienenbügelunterteilen 116 angeordneten Schienenbügeloberteil 142, an dem Schienenclips 140 zur Fixierung einer in den Fig. 5 und 6 nicht dargestellten Führungsschiene angeordnet sind. Die Position des Schienenbügeloberteils 142 und der beiden Schienenbügelunterteile 116 zueinander kann in einer Richtung senkrecht zur Schachtwand 18 verändert und damit eine in den Fig. 5 und 6 nicht dargestellte Führungsschiene zumindest teilweise ausgerichtet werden.

Um das Omega-Bracket 115 an einer Schachtwand 18 fixieren zu können, werden mit der Montagevorrichtung 14 für jedes Schienenbügelunterteil 116 jeweils zwei, in Haupterstreckungsrichtung 11 des Aufzugschachts übereinander angeordnete Löcher gebohrt und Ankerbolzen 44 eingebracht. Da sobald die Schienenbügelunterteile 116 fest an der Schachtwand 18 fixiert sind, zum Ausrichten der Führungsschiene nur noch die Position des Schienenbügeloberteils 142 zu den Schienenbügelunterteilen 116 senkrecht zur Schachtwand 18 verändert werden kann, müssen die Schienenbügelunterteile 116 so an der Schachtwand 18 fixiert werden, dass nur mit der beschriebenen Positionsänderung die Soll-Position der am Omega-Bracket 115 gehaltenen Führungsschiene einstellbar ist. Die Schienenbügelunterteile 116 und damit das Omega-Bracket 115 muss damit an einer bestimmten Soll-Position an der Schachtwand 18 fixiert werden. Diese Soll-Position wird von der Montagevorrichtung 14 mit einer Markierung in Form einer Linie 169 markiert. Um das Omega-Bracket 115 in seine Soll-Position bringen zu können, weisen die Schienenbügelunterteile 116 jeweils zwei in Haupterstreckungsrichtung 11 des Aufzugschachts übereinander angeordnete und in horizontaler Richtung verlaufende Langlöcher 117 auf.

Zur Fixierung des Omega-Brackets 115 an der Schachtwand 18 ordnet der Monteur das Omega-Bracket 115 so an der Schachtwand 18 an, dass die vier Ankerbolzen 44 durch die vier korrespondierenden Langlöcher 117 der Schienenbügelunterteile 116 ragen. Anschliessend schraubt der die Muttern auf die Gewinde der Ankerbolzen 44 auf und zieht sie leicht an. Damit fixiert er das Omega-Bracket 115 provisorisch an der Schachtwand 18. Anschliessend verschiebt er das Omega-Bracket 15 so weit entlang der Schachtwand 18, bis eine Kante 119 des in den Fig. 5 und 6 linken Schienenbügelunterteils 116 in Deckung mit der Linie 169 kommt und damit das Omega-Bracket 115 seine Soll-Position erreicht hat. Abschliessend zieht der Monteur die Muttern der Ankerbolzen 44 fest an und fixiert das Omega-Bracket 115 damit fest an der Schachtwand 18. Das Omega-Bracket 115 ist damit so an der Schachtwand 18 angeordnet, dass die Soll-Position der von ihm gehaltenen Führungsschiene nur durch eine Veränderung der Position des Schienenbügeloberteils 142 zu den Führungsschienenunterteilen 116 in senkrechter Richtung zur Schachtwand 18 eingestellt werden kann. Zur endgültigen Ausrichtung der Führungsschiene kann ebenfalls eine Ausrichtvorrichtung gemäss den Fig. 3 und 4 verwendet werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Ausrichtvorrichtung zum Ausrichten einer Führungsschiene (38) in einem Aufzugschacht (10) einer Aufzuganlage (12), welche dazu eingerichtet ist, die Führungsschiene (38) gegenüber einer mindestens drei voneinander beabstandete Punkte (68) aufweisenden Markierung (69) an einer Schachtwand (18) des Aufzugschachts (10) auszurichten,
wobei die Ausrichtvorrichtung (52) aufweist:
- ein Anlageteil (54) mit einer Ausnehmung (56), welche über eine komplementäre Form einer Lauffläche (58) der Führungsschiene (38) verfügt und
- eine Peilvorrichtung (60), welche so ausgeführt und angeordnet ist, dass das Anlageteil (54) in eine definierte Position gegenüber der Markierung (68) an der Schachtwand (18) gebracht werden kann und eine Lasereinrichtung (65) aufweist, welche mindestens drei voneinander beabstandete Punkte (71) an die Schachtwand (18) des Aufzugschachts (10) projizieren kann.

2. Ausrichtvorrichtung nach Anspruch 1,
**dadurch gekennzeichnet, dass**
die Lasereinrichtung (65) der Peilvorrichtung (60) über drei Laser (64) verfügt.

3. Ausrichtvorrichtung nach Anspruch 1 oder 2,
**gekennzeichnet durch**
eine langgestreckte Prüfmarkierung (72), welche so ausgeführt ist, dass ein korrekter Verlauf einer an der Ausrichtvorrichtung (52) befestigten Schnur (70) geprüft werden kann.

4. Verfahren zur Montage einer Führungsschiene (38) in einem Aufzugschacht (10) einer Aufzuganlage (12),
bei welchem zuerst mit einer Montagevorrichtung (14), welche
- eine Trägerkomponente (20);
- eine Installationskomponente (22) und
- eine Steuerungseinrichtung (16) zum Ansteuern der Installationskomponente (22),
aufweist, wobei die Trägerkomponente (20) dazu ausgelegt ist, relativ zum Aufzugschacht (10) verlagert und in verschiedenen Höhen innerhalb des Aufzugschachts (10) positioniert zu werden und
die Installationskomponente (22) an der Trägerkomponente (20) gehalten und dazu ausgelegt ist, einen Montageschritt im Rahmen des Installationsvorgangs zumindest teilautomatisch auszuführen,
- die Steuerungseinrichtung (16) ausgehend von einer Ist-Position der Montagevorrichtung (14) und einer Soll-Position einer im Aufzugschacht (10) zu installierenden Führungsschiene (38) eine Position einer Markierung (69) an einer Schachtwand (18) des Aufzugschachts (10) relativ zur Ist-Position der Montagevorrichtung (14) bestimmt, ausgehend von der in einem folgenden Installationsschritt die Soll-Position der Führungsschiene (38) bestimmt werden kann und
- mit der Installationskomponente (22) die genannte Markierung (69) an der Schachtwand (18) angebracht wird
und anschliessend folgende Schritte ausgeführt werden:
- Ausrichten der Führungsschiene (38) gegenüber der genannten Markierung (69) und
- Fixieren der Führungsschiene (38) an der Schachtwand (18).

5. Verfahren nach Anspruch 4,
**dadurch gekennzeichnet, dass**
zum Ausrichten der Führungsschiene (38) gegenüber der genannten Markierung (69) eine Ausrichtvorrichtung (52) gemäss einem der Ansprüche 1 bis 3 an der Führungsschiene (38) angeordnet wird und die drei von der Lasereinrichtung (65) der Peilvorrichtung (60) an die Schachtwand (18) projizierten Punkte (71) in Deckung mit der genannten Markierung (69) an der Schachtwand (18) gebracht werden.

6. Verfahren nach Anspruch 4 oder 5,
**dadurch gekennzeichnet, dass**
mittels der genannten Markierung (69) an der Schachtwand (18) wenigstens drei voneinander beabstandete Punkte (68) markiert werden.

7. Verfahren nach Anspruch 4, 5 oder 6,
**dadurch gekennzeichnet, dass**
die Ist-Position der Montagevorrichtung (14) und die Soll-Position der Führungsschiene (38) auf Basis wenigstens eines im Aufzugschacht (10) angeordneten Referenzelements (13) bestimmt wird.

8. Verfahren nach einem der Ansprüche 4 bis 7,
**dadurch gekennzeichnet, dass**
das Referenzelement (13) in einer Haupterstreckungsrichtung (11) des Aufzugschachts (10) verläuft.

9. Verfahren nach einem der Ansprüche 4 bis 8,
**dadurch gekennzeichnet, dass**
gleichzeitig zwei gegenüberliegende Führungsschienen (38) ausgerichtet werden.

10. Verfahren nach Anspruch 9,
**dadurch gekennzeichnet, dass**
das Ausrichten der beiden gegenüberliegenden Führungsschienen (38) mittels jeweils einer Ausrichtvorrichtung (52) erfolgt, welche mittels einer Schnur (70) verbunden sind und ein korrekter Verlauf der genannten Schnur (70) geprüft wird.

11. Verfahren nach Anspruch 9 oder 10,
**dadurch gekennzeichnet, dass**
ein Abstand der beiden gegenüberliegenden Führungsschienen (38) überprüft wird.

## Claims

1. Alignment device for alignment a guide rail (38) in an elevator shaft (10) of an elevator system (12), which device is designed to orient the guide rail (38) relative to a marking (69) on a shaft wall (18) of the elevator shaft (10), which marking comprises at least three mutually spaced dots (68),
wherein the alignment device (52) comprises:
- an abutment part (54) having a recess (56) which has a complementary shape to a running surface (58) of the guide rail (38), and
- a targeting device (60) which is designed and arranged such that the abutment part (54) can be brought into a defined position relative to the marking (68) on the shaft wall (18) and which comprises a laser means (65) that can project at least three mutually spaced dots (71) onto the shaft wall (18) of the elevator shaft (10).

2. Alignment device according to claim 1, **characterized in that** the laser means (65) of the targeting device (60) has three lasers (64).

3. Alignment device according to either claim 1 or claim 2, **characterized by** an elongate verification marking (72) which is designed such that a correct course of a cord (70) fastened to the alignment device (52) can be checked.

4. Method for mounting a guide rail (38) in an elevator shaft (10) of an elevator system (12),
in which method first by means of a mounting device (14), which comprises
- a carrier component (20);
- an installation component (22) and
- a control apparatus (16) for controlling the installation component (22),
wherein the carrier component (20) is designed to be displaced relative to the elevator shaft (10) and to be positioned at different heights within the elevator shaft (10) and
the installation component (22) is held on the carrier component (20) and is designed to carry out a mounting step in an at least partially automated manner as part of the installation process,
the following steps are carried out:
- the control apparatus (16) determines, on the basis of an actual position of the mounting device (14) and a desired position of a guide rail (38) to be installed in the elevator shaft (10), a position of a marking (69) on a shaft wall (18) of the elevator shaft (10) relative to the actual position of the mounting device (14), on the basis of which position the desired position of the guide rail (38) can be determined in a following installation step, and
- said marking (69) is applied to the shaft wall (18) by means of the installation component (22)
and then the following steps are carried out:
- alignment the guide rail (38) relative to said marking (69) and
- securing the guide rail (38) on the shaft wall (18).

5. Method according to claim 4, **characterized in that** an alignment device (52) according to any of claims 1 to 3 is arranged on the guide rail (38) in order to orient the guide rail (38) relative to the above-mentioned marking (69) and the three dots (71) projected onto the shaft wall (18) by the laser means (65) of the targeting device (60) are brought into alignment with said marking (69) on the shaft wall (18).

6. Method according to either claim 4 or claim 5, **characterized in that** at least three mutually spaced dots (68) are marked by means of the above-mentioned marking (69) on the shaft wall (18).

7. Method according to claim 4, claim 5 or claim 6, **characterized in that** the actual position of the mounting device (14) and the desired position of the guide rail (38) are determined on the basis of at least one reference element (13) arranged in the elevator shaft (10).

8. Method according to any of claims 4 to 7, **characterized in that** the reference element (13) extends in a main extension direction (11) of the elevator shaft (10).

9. Method according to any of claims 4 to 8, **characterized in that** two opposing guide rails (38) are aligned simultaneously.

10. Method according to claim 9, **characterized in that** the two opposing guide rails (38) are aligned by means of one alignment device (52) in each case, which devices are connected by means of a cord (70) and a correct course of said cord (70) is checked.

11. Method according to either claim 9 or claim 10, **characterized in that** a spacing between the two opposing guide rails (38) is checked.

## Revendications

1. Dispositif d'alignement permettant d'aligner un rail de guidage (38) dans une cage d'ascenseur (10) d'une installation d'ascenseur (12), ledit dispositif d'alignement étant conçu pour aligner le rail de guidage (38) par rapport à un marquage (69) comportant au moins trois points (68) espacés les uns des autres sur une paroi de cage (18) de la cage d'ascenseur (10),
le dispositif d'alignement (52) comportant :
- une partie d'appui (54) comportant un évidement (56), lequel présente une forme complémentaire d'une surface de roulement (58) du rail de guidage (38) et
- un dispositif de goniométrie (60), lequel est conçu et agencé de telle sorte que la partie d'appui (54) peut être amenée dans une position définie par rapport au marquage (68) sur la paroi de cage (18) et comporte un dispositif laser (65), lequel peut projeter au moins trois points (71) espacés les uns des autres sur la paroi de cage (18) de la cage d'ascenseur (10).

2. Dispositif d'alignement selon la revendication 1,
**caractérisé en ce que**
le dispositif laser (65) du dispositif de goniométrie (60) est pourvu de trois lasers (64).

3. Dispositif d'alignement selon la revendication 1 ou 2,
**caractérisé par**
un marquage de contrôlé (72) allongé, lequel est réalisé de telle sorte qu'un parcours correct d'un câble (70) fixé au dispositif d'alignement (52) peut être contrôlé.

4. Procédé d'assemblage d'un rail de guidage (38) dans une cage d'ascenseur (10) d'une installation d'ascenseur (12),
tout d'abord, comportant un dispositif de montage (14), lequel comporte
- un composant de support (20) ;
- un composant d'installation (22) et
- un appareil de commande (16) permettant de commander le composant d'installation (22),
dans lequel le composant de support (20) est conçu pour être déplacé par rapport à la cage d'ascenseur (10) et pour être positionné à différentes hauteurs à l'intérieur de la cage d'ascenseur (10), et
le composant d'installation (22) est maintenu sur le composant de support (20) et est conçu pour mettre en œuvre une étape de montage dans le cadre du processus d'installation, au moins partiellement automatiquement,
- l'appareil de commande (16), à partir d'une position réelle du dispositif d'assemblage (14) et d'une position de consigne d'un rail de guidage (38) à installer dans la cage d'ascenseur (10), détermine une position d'un marquage (69) sur une paroi de cage (18) de la cage d'ascenseur (10) par rapport à la position réelle du dispositif de montage (14), à partir de laquelle la position de consigne du rail de guidage (38) peut être déterminée lors d'une étape d'installation suivante et
- avec le composant d'installation (22), ledit marquage (69) est posé sur la paroi de cage (18),
puis les étapes suivantes sont mises en œuvre :
- l'alignement du rail de guidage (38) par rapport audit marquage (69) et
- la fixation du rail de guidage (38) sur la paroi de cage (18).

5. Procédé selon la revendication 4,
**caractérisé en ce que**
pour aligner le rail de guidage (38) par rapport audit marquage (69), un dispositif d'alignement (52) selon l'une quelconque des revendications 1 à 3 est disposé sur le rail de guidage (38) et les trois points (71) projetés sur la paroi de cage (18) par le dispositif laser (65) du dispositif de goniométrie (60) sont appliqués en coïncidence avec ledit marquage (69) sur la paroi de cage (18).

6. Procédé selon la revendication 4 ou 5,
**caractérisé en ce que**,
au moyen dudit marquage (69), au moins trois points (68) espacés les uns des autres sont marqués sur la paroi de cage (18).

7. Procédé selon la revendication 4, 5 ou 6,
**caractérisé en ce que**,
la position réelle du dispositif de montage (14) et la position de consigne du rail de guidage (38) sont déterminées sur la base d'au moins un élément de référence (13) disposé dans la cage d'ascenseur (10).

8. Procédé selon l'une quelconque des revendications 4 à 7,
**caractérisé en ce que**,
l'élément de référence (13) s'étend dans une direction d'extension principale (11) de la cage d'ascenseur (10).

9. Procédé selon l'une quelconque des revendications 4 à 8,
**caractérisé en ce que**,
deux rails de guidage (38) opposés sont alignés en même temps.

10. Procédé selon la revendication 9,
**caractérisé en ce que**,
l'alignement des deux rails de guidage (38) opposés est effectué au moyen, respectivement, d'un dispositif d'alignement (52), lesdits dispositifs d'alignement étant reliés au moyen d'un câble (70) et un parcours correct dudit câble (70) est contrôlé.

11. Procédé selon la revendication 9 ou 10,
**caractérisé en ce que**,
une distance entre les deux rails de guidage (38) opposés est contrôlée.
